# EUROPÄISCHE PATENTSCHRIFT

(11) **EP 2 053 574 B1**
(45) Veröffentlichungstag und Bekanntmachung des Hinweises auf die Patenterteilung: **12.11.2014**
(21) Anmeldenummer: 07020903.6
(22) Anmeldetag: 25.10.2007
(51) Int. Cl.: G08B 17/107, G01N 21/53

(54) **Rauchmelder mit Teilchenunterdrückung**
Smoke detector with particle suppression
Détecteur de fumée avec répression de particules

(43) Veröffentlichungstag der Anmeldung: 29.04.2009
(73) Patentinhaber: Securiton AG, CH-3052 Zollikofen (CH)
(72) Erfinder: Scheidthauer, Uwe, 79282 Ballrechten-Dottingen (DE); Laufersweiler, Robert, 79189 Bad Krozingen (DE); Schürch, Martin, 3604 Thun (CH)
(74) Vertreter: Kunst, Manuel Nikolaus Johannes

(56) Entgegenhaltungen:
- EP-A- 1 251 471
- WO-A-91/18341
- WO-A-2005/071390

## Beschreibung

### Technisches Gebiet

Die Erfindung betrifft einen Streulichtrauchsensor sowie ein Verfahren zur Erkennung von Feuer und Rauch, in welchen Signalanteile, die nicht durch Rauch hervorgerufen sind, aus den Messsignalen herausgefiltert bzw. unterdrückt werden.

### Stand der Technik

Streulichtsensoren verfügen über ein Messvolumen, in welches ein Sender Licht oder elektromagnetische Strahlung anderer Wellenlängen einstrahlt. Teilchen, die sich in diesem Messvolumen befinden, streuen dieses Licht, wodurch ein Teil des gestreuten Lichtes auf wenigstens einen Streulichtempfänger gelangt, der das eingefallene Licht in ein elektrisches Signal umwandelt. Dieses Signal wird anschließend zur Ermittlung der Teilchendichte im überwachten Bereich ausgewertet. Bei Streulichtsensoren für spezifische Messaufgaben wie verschmutzungssensoren, Analysegeräte, Rauchmelder usw. ist es, um bestimmte Empfindlichkeiten zu erreichen, sinnvoll zwischen Signalen von unterschiedlichen Teilchenarten zu unterscheiden oder Signalanteile, die von anderen als den gesuchten Teilchenarten herrühren, zu unterdrücken. Da Rauchmelder in der Regel dazu eingesetzt werden, Feueralarme auszulösen oder Aktoren zu schalten, ist auch hier von Vorteil, wenn ein Rauch- bzw. Feueralarm nicht aufgrund von z. B. Staub, Wassertröpfchen, Fusseln oder Insekten, sondern möglichst nur durch Rauch ausgelöst wird.

Um zwischen verschiedenen Teilchen zu unterscheiden, sind bereits verschiedene Techniken bekannt.

Aus der WO 92/19955 A1 ist z. B. ein Rauchsensor bekannt, der die Streulichtsignale aus mindestens zwei verschiedene Streuwinkeln nutzt, um zwischen Rauch und Staub zu unterscheiden. Andere Sensoren nutzen hierfür Licht verschiedener Wellenlängen oder unterschiedlicher Polarisationsebenen. Ebenso sind Melder bekannt, die zwei oder mehrere dieser Techniken kombinieren. Derartige Melder nutzen die unterschiedlichen Streueigenschaften verschiedener Partikel zu deren Klassifizierung, benötigen jedoch zusätzliche Bauteile wie Sender, Empfänger oder Polfilter und machen die Melder dadurch komplizierter.

Einen anderen Weg geht die wO 94/03792. Darin wird ein Partikelsensor mit einem relativ kleinen Messvolumen beschrieben. Zur Unterscheidung zwischen Staub- oder Rauchpartikeln werden die Gleich- und Wechselstromanteile im Streulichtmesssignal ausgewertet. Dabei repräsentiert der niederfrequente Gleichanteil im Signal die gemessene Aerosoldichte, während aus dem höherfrequenten wechselanteil ein Unterscheidungswert für Staub und Rauch abgeleitet wird, wobei davon ausgegangen wird, dass vor allem Staub für die höherfrequenten Signalanteile, welche z. B. durch die Varianz mehrerer Signalproben repräsentiert wird, verantwortlich ist, während Rauch eher niederfrequente Signalanteile liefert. Bevor durch diesen Partikelsensor ein Rauchalarm ausgelöst wird, wird zunächst der Gleichanteil mit einer Schwelle verglichen und nach deren Überschreiten geprüft, ob das Aerosol eher Staub oder Rauch enthält. Nur dann, wenn das Messsignal auf Rauch zurückzuführen ist, wird ein Rauchalarm ausgelöst.

Auch in der DE 696 36 022 T2 wird ein Rauchmelder mit einem kleinen Messvolumen beschrieben, wobei die Abmessungen des Messvolumens kleiner sein sollen, als der typische Abstand zwischen Staubpartikeln. In diesem kleinen Streuvolumen erzeugen die kleinen Rauchpartikel ein relativ konstantes niederfrequentes Signal, während größere Partikel wie Staub ein kurzlebiges hochfrequentes Signal erzeugen. Um einen falschen, durch Staub bedingten Rauchalarm zu vermeiden, wird hier eine aktuelle Signalprobe mit einer früheren Signalprobe verglichen und die aktuelle Signalprobe durch die kleinere von beiden ersetzt. Dabei wird in der DE 696 36 022 T2 davon ausgegangen, dass das kleine Messvolumen für das angewandte Verfahren zwingend erforderlich ist, da extensive Experimente mit bekannten Rauchmeldern, welche z. B. ein größeres Messvolumen von z. B. ungefähr 1cm³ (0,064 Kubikzoll) aufwiesen, beim Vorhandensein von staub ein glattes Messsignal zeigten. Daraus ist zu schließen, dass die in der DE 696 36 022 T2 beschriebene Signalauswertung nicht auf Rauchmelder anwendbar ist, die ein größeres als das in der DE 696 36 022 T2 geforderte Messvolumen aufweisen. Um derart kleine Streuvolumen, wie sie in der WO 94/03792 und der DE 696 36 022 T2 gefordert werden, zu erhalten, sind entweder komplexe und somit aufwändige Linsensysteme, die teuer sind, oder Laser notwendig'. Laser sind zudem teure Bauteile, machen zusätzlich die Berücksichtigung von LASER- schutzklassen nötig und weisen im Betrieb einen eingeschränkten Temperaturbereich auf.
Daher soll trotz der, in der DE 696 36 022 T2 dargelegten Auffassung mit der vorliegenden Erfindung ein Rauchmeldesystem beschrieben werden, das auch mit einem größeren als in der DE 696 36 022 T2 geforderten Messvolumen und einem ähnlichen Verfahren zwischen Rauch und Partikeln, die größer als Rauchpartikel sind, unterschieden werden kann bzw. Signalanteile, die von größeren Partikel herrühren, aus dem Messsignal herausfiltert.

Aus der WO 2005/071390 ist ein Streulichtdetektor bekannt, der einen Lüfter enthält, der für einen Luftstrom sorgt. Das Streulichtsignal läuft u.a. eine Filteralgorithmusstufe durch.

### Beschreibung der Erfindung

Die Lösung dieser Aufgabe besteht in den Merkmalen der Ansprüche 1 und/oder 2 und wird im Folgenden näher beschrieben. Demnach umfasst ein erfindungsgemäßes Rauchmeldesystem einen fotoelektrischen Rauchsensor mit einem Messvolumen und Mittel, die eine Strömung im Messvolumen erzwingen. Der Rauchsensor umfasst eine Signalverarbeitungseinheit, welche die Signale eines Fotosensors auswertet, der elektromagnetische Strahlen empfängt, die aus dem Messvolumen austreten. In der Signalverarbeitungseinheit ist weiterhin ein Filter vorgesehen, in dem einzelne Signalproben in einer ersten Vergleichseinrichtung mit Schwellwerten verglichen werden und beim Über- bzw. Unterschreiten dieser schwellwerte durch andere Werte ersetzt werden. Diese Erfindung funktioniert - entgegen den Annahmen des Standes der Technik - auch mit einem Messvolumen, dessen Abmessungen mindestens gleich oder größer als der typische Abstand zwischen umgebenden Staubpartikeln sind. Unter dem typischen Abstand zwischen Staubpartikeln ist dabei der typische Abstand zwischen umgebenden Staubpartikeln in einer normalen Umgebung anzusehen, und nicht der Abstand in besonders sauberen Umgebungen, wie Reinräumen, die selbst als Sonderumgebung anzusehen sind.
In dem erfindungsgemäßen Raucheldesystem sind ferner mindestens ein Speicher zum Speichern eines Mittelwertes und ein Modul zum Berechnen eines ersten Mittelwertes aus mehrere Signalproben vorgesehen. In dem Mittelwertberechnungsmodul werden Signalproben, welche die vorgegebenen Schwellwerte in der ersten Vergleichseinrichtung über- oder unterschreiten, nicht zur Berechnung des ersten Mittelwertes verwendet, sondern werden durch einen früheren Mittelwert ersetzt, der dem Speicher entnommen wird.
In dem Rauchmeldesystem ist ein Zähler vorgesehen, der alle Signalproben zählt, die während der Berechnung eines ersten Mittelwertes ersetzt worden sind.
Zur Bestimmung, ob Rauch in dem Messvolumen vorhanden ist, wird in einem Rauchbestimmungsabschnitt, der erste Mittelwert in einer dritten Vergleichseinrichtung mit einer Alarmschwelle verglichen. Wenn der Zähler aber in einer zweiten Vergleichseinrichtung einen gegebenen Wert überschreitet, also sehr viele Ersetzungen, z. B. mehr als die Hälfte aller für die Mittelwertbildung herangezogenen Werte bei der Berechnung des ersten Mittelwertes, vorgenommen wurden, wird nicht der Erste sondern ein zweiter Mittelwert in der dritten Vergleichseinrichtung mit der Alarmschwelle verglichen. Der zweite Mittelwert wird gleichzeitig mit dem ersten Mittelwert im Mittelwertberechnungsmodul berechnet, dabei werden für den zweiten Mittelwert jedoch keine Ersetzungen vorgenommen, sondern immer die aktuellen Messwerte verwendet. Im Rauchbestimmungsabschnitt wird dann Rauch erkannt, wenn der Mittelwert, der in der dritten Vergleichseinrichtung mit der Alarmschwelle verglichen wird, die Alarmschwelle überschreitet.

Die Erfindung betrifft auch ein Verfahren zum Erkennen von Rauch in einem fotoelektrischen Rauchsensor. In diesem Verfahren wird in einem streulichtmessvolumen eine gerichtete Strömung erzwungen. In dieses Messvolumen werden elektromagnetische strahlen gesendet und Teile dieser Strahlung, die, weil sie an Teilchen in dem Messvolumen gestreut werden, wieder aus dem Messvolumen austreten, werden gemessen. Die sich dabei ergebenden Messwerte werden mit mindestens einem vorgegebenen Schwellwert verglichen. Dabei werden die Messwerte, welche die Schwellwerte über- oder unterschreiten, durch Werte ersetzt, welche beim Überschreiten unter - bzw. beim Unterschreiten über - dem Schwellwert liegen. Durch die gerichtete Strömung ist es möglich, dass die Abmessungen des Messvolumens mindestens gleich oder größer als der typisch Abstand zwischen umgebenden Staubpartikeln sind.
In dem Verfahren wird aus einer Anzahl von Messwerten ein erster Mittelwert gebildet, wobei bei der Bildung des ersten Mittelwertes die Messwerte, welche den Schwellwert über- oder unterschreiten, durch einen früheren Mittelwert ersetzt werden. Die übrigen Messwerte werden unverändert in die Bildung des ersten Mittelwertes einbezogen.
Der so ermittelte erste Mittelwert wird zur Bestimmung von Rauch mit einer Alarmschwelle verglichen. Dabei wird Rauch erkannt, wenn der erste Mittelwert die Alarmschwelle überschreitet.
In dem Verfahren zum Erkennen von Rauch wird die Anzahl der, bei der Bildung des ersten Mittelwerts, ersetzten Werte gezählt. Wird nun eine bestimmte Anzahl von Ersetzungen überschritten, dann wird nicht der erste Mittelwert, sondern ein zweiter Mittelwert mit der Alarmschwelle verglichen, um das Vorhandensein von Rauch zu bestimmen. Dabei wird Rauch erkannt, wenn der zweite Mittelwert die Alarmschwelle überschreitet. Die Bildung des zweiten Mittelwertes erfolgt im Wesentlichen zeitgleich mit der Bildung des ersten Mittelwertes und verwendet dieselben Messe werte. Im Gegensatz zur Bildung des ersten Mittelwertes werden jedoch keine Messwerte gegen andere Werte ausgetauscht, sondern nur die tatsächlichen Messwerte für die Bildung des zweiten Mittelwertes verwendet.

### Kurze Beschreibung der Zeichnungen

Figur 1 zeigt ein erfindungsgemäßes Rauchmeldesystemsystem.

Figur 2 zeigt einen erfindungsgemäßen Streulichtrauchmelder mit einem Messvolumen.

Figur 3 zeigt eine Folge von Messwerten.

### Beschreibung der Ausführungsbeispiele

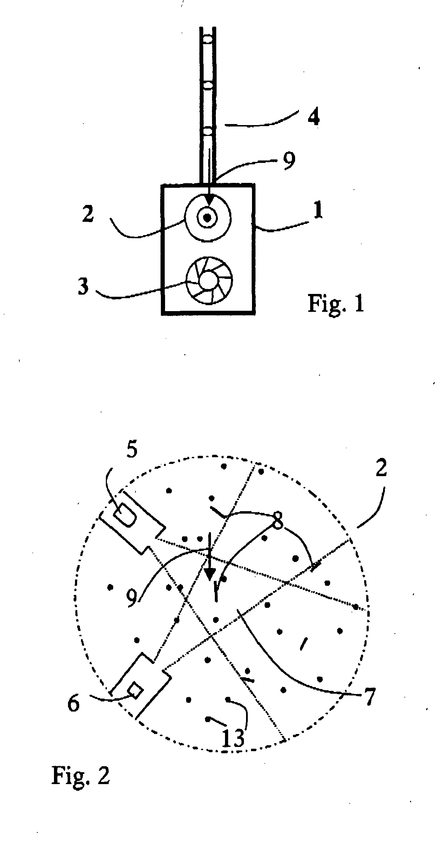

Im Folgenden wird nun die Erfindung anhand der Zeichnungen näher erläutert. Figur 1 zeigt ein erfindungsgemäßes Rauchmeldesystem (1). Dieses umfasst einen Streulichtrauchsensor (2) und einen Ventilator (3), der eine gerichtete Strömung (9) in dem Streulichtrauchsensor (2) erzwingt. Bei dem in Figur 1 gezeigten Beispiel handelt es sich um ein Rauchansaugsystem. Die Erfindung umfasst aber auch Rauchmeldesysteme (1), bei denen ein Rauchmelder (2) in einer Umgebung mit einer gerichteten Strömung (9), wie 2. B. Lüftungskanälen oder Bypasssystemen betrieben wird.

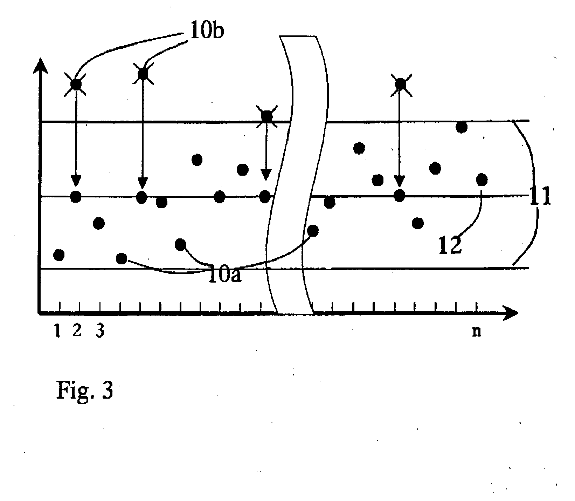

Der Streulichtrauchsensor (2) ist in Figur 2 etwas detaillierter dargestellt. Gezeigt ist dort ein Sender (5), der Licht in ein Messvolumen (7) sendet, das innerhalb' einer Messkammer liegen kann. In dem Messvolumen (7) befindet sich neben Staubteilchen (13) auch ein Fussel (8). Aufgrund seiner Größe und Ausrichtung streut der Fussel (8) vier Licht auf einen Empfänger (6) und erzeugt dadurch ein hohes Signal (10b) an dessen Ausgang. Da der Lüfter (3) die gerichtete Strömung (9) in dem Messvolumen (7) erzwingt, kann sich dieser Fussel nur für eine kurze Zeit im Messvolumen aufhalten und somit nur ein Signal von kurzer Dauer erzeugen. Ohne die gerichtete Strömung (9) würde sich der Fussel (8) ungeordnet im Messvolumen hin und her und nur durch zufällige Bewegungen daraus heraus bewegen. Die Folge wäre ein lang Andauerndes hohes Signal, was einen falschen Rauchalarm hervorrufen kann. Ebenso wie Fussel können andere Teilchen, ähnlicher Größe wie Fussel oder Insekten, die in das Messvolumen (7), gelangen, ein kurzes hohes Signal erzeugen. Kleinere Partikel wie Rauch oder staub (13) erzeugen hingegen ein niedrigeres Signal, das nur bei größeren Mengen dieser Teilchen entsprechend hohe Signale liefert, die dann jedoch auch länger andauern. Staub (13) wiederum ist in vielen Umgebungen ständig in einer geringen Konzentration vorhanden und liefert daher ein, in gewissen Grenzen, konstantes Hintergrundsignal, während Rauch nur bei verbrennungsvorgängen entsteht und daher bei dessen Auftreten für einen deutlichen Signalanstieg sorgt.
Der erfindungsgemäße Rauchsensor (2) enthält eine nicht dargestellte Signalverarbeitungseinheit mit einem Filter. Das Filter kann dabei als Programmabschnitt, der in einem Prozessor läuft, realisiert sein. In diesem Filter werden in einem Mittelwertberechnungsmodul aus n Signalproben (10) des Empfängers (6) ein erster und ein zweiter Mittelwert berechnet. Zur Berechnung des ersten Mittelwertes werden alle n signalproben (10) in einer ersten Vergleichseinrichtung mit Schwellwerten (11) verglichen, die in Figur 3 gezeigt sind. Die Signalproben (10b), welche die Schwellwerte (11) über-oder unterschreiten, werden durch einen älteren Mittelwert (12) ersetzt, der zuvor in einem Speicher abgelegt wurde. Bei der Berechnung des zweiten Mittelwertes werden die originalen Signalproben (10a/10b) unabhängig von ihrem tatsächlichen Wert berücksichtigt. Zusätzlich ist in dem Filter ein Zähler vorgesehen, der die Anzahl der, bei der Berechnung des ersten Mittelwertes ersetzten Signalproben (10b) zählt. Der Ausgang des Zählers ist mit einer zweiten vergleichseinrichtung vierbunden. Wird in der zweiten vergleichseinrichtung festgestellt, dass der Zählerstand einen gegebenen, aber parametrierbaren wert von z. B. n/2 überschreitet, wird der zweite Mittelwert in einer dritten Vergleichseinrichtung mit einer Alarmschwelle verglichen. Wird jedoch in der zweiten Vergleichseinrichtung festgestellt, dass der Zählerstand unter dem gegebenen Wert liegt, wird der erste Mittelwert in der dritten Vergleichseinrichtung mit der Alarmschwelle verglichen. Rauch wird dann erkannt, wenn der Mittelwert, der in der dritten Vergleichseinrichtung mit der Alarmschwelle verglichen wurde, über der Alarmschwelle liegt. Durch die Verwendung des Mittelwertes für die Rauchbestimmung wird das ausgewertete Signal bereits stark geglättet. Die Ersetzung einzelner Signalproben (10b) durch einen älteren Mittelwert sorgt für eine noch stärkere Glättung des ausgewerteten Signals und führt dazu, dass Signalanteile, welche durch Fussel, Insekten oder andere Fremdkörper hervorgerufen werden, zuverlässig ausgeblendet werden. Dabei bewirkt die Begrenzung auf eine maximale Anzahl von Ersetzungen, dass eine Verzögerung des Signalanstieges auf ein notwendiges Mindestmaß beschränkt wird. Dabei bleiben die Schwellwerte (11), der Zählergrenzwert und die Alarmschwelle parametrierbar, um sie den Umweltbedingungen anzupassen.
In einem erfindungsgemäßen Verfahren werden in einem Messvolumen (7) eine gerichtete Strömung (9) erzwungen, jede Sekunde n Messpulse in das Messvolumen (7) abgegeben und die dazu korrespondierenden Signalproben (10) am Ausgang eines Streulichtempfängers (6) erfasst. Aus den n Signalproben (10) werden zwei verschiedene Mittelwerte gebildet. Zur Bildung des ersten Mittelwertes, werden die Signalproben (10) mit Schwellen (11) verglichen. Wenn eine Signalprobe (10b) eine Schwelle (11) über- bzw. unterschreitet, wird diese Probe(10b) nicht für die Berechnung des ersten Mittelwertes herangezogen, sondern durch einen älteren Mittelwert (12) ersetzt. Bei der Berechnung des zweiten Mittelwertes hingegen werden alle Signalproben (10) unverändert berücksichtigt. Bei der Berechnung des ersten Mittelwertes läuft gleichzeitig ein Zähler mit, der die Anzahl der ersetzten Signalproben (10b) zählt. Vor dem Beginn einer neuen Mittelwertberechnung wird dieser Zähler zurückgesetzt. Zuvor wird jedoch in Abhängigkeit des Zählerstandes entschieden, ob der erste oder der zweite Mittelwert mit der Alarmschwelle verglichen wird. Wenn die Anzahl der Ersetzungen unter einer gegebenen Grenze bleibt wird der erste Mittelwert mit der Alarmschwelle verglichen und Rauch wird erkannt, wenn der erste Mittelwert die Alarmschwelle überschreitet. Wenn jedoch die Anzahl der Ersetzungen im ersten Mittelwert über der Grenze liegt, wird der zweite Mittelwert mit der Alarmschwelle verglichen und Rauch wird erkannt, wenn der zweite Mittelwert die Alarmschwelle überschreitet. So können Signalanteile, die nicht auf Rauch sondern auf größere Teilchen wie Fussel oder Insekten zurückzuführen sind, wirksam unterdrückt werden.

## Patentansprüche

1. Verfahren zum Erkennen von Rauch mit folgenden Verfahrensschritten,
a) Messen von elektromagnetischen Strahlen, welche aus einem Messvolumen (7) austreten, wobei eine gerichtete Strömung im Messvolumen herbeigeführt wird,
b) Bilden erster und zweiter Mittelwerte aus einer Anzanl von Messwerten,
c) Ersetzen von Messwerten (10b), welche einen Schwellwert (11) über- bzw. unterschreiten, durch einen früheren Mittelwert (12) bei der Bildung des ersten Mittelwerts, wobei im zweiten Mittelwert keine Ersetzungen vorgenommen werden,
d) Zählen einer Anzahl von bei der Bildung des ersten Mittelwerts ersetzten Messwerten,
e) Vergleichen des ersten oder zweiten Mittelwertes mit einer Alarmschwelle, wobei beim Überschreiten einer bestimmten Anzahl von Ersetzungen nicht der erste Mittelwert, sondern der zweite Mittelwert mit der Alarmschwelle verglichen wird.

2. Rauchsensor (2) mit Mitteln zur Durchführung des Verfahrens nach einem der Ansprüche 1 oder 2 enthaltend ein Mittelwertberechnungsmodul zur Berechnung eines ersten und eines zweiten Mittelwertes aus n Signalproben (10) eines Empfängers (6), eine erste Vergleichseinrichtung zum Vergleichen der Signalproben (10) mit Schraellwerten (11), ein Zähler, der eine Anzahl von Signalproben (10b) zählt, die bei der Berechnung des ersten Mittelwertes ersetzt wurden, eine zweite Vergleichseinrichtung, die den Zählerstand des Zählers mit einem parametrierbaren wert vergleicht und eine dritte vergleichseinrichltung, die den ersten oder den zweiten Mittelwert mit einer Alarmschwelle vergleicht.

3. Rauchsensor (2) nach Anspruch 3 **dadurch gekennzeichnet, dass** das Mittelwertberechnungsmodul eingerichtet ist um bei der Berechnung des ersten Mittelwertes die Signalproben (10b), welche die Schwellwerte (11) über- oder unterschreiten, durch einen älteren Mittelwert (12) zu ersetzen.

4. Rauchsensor (2) nach Anspruch 4 **dadurch gekennzeichnet, dass** das Mittelwertberechnungsmodul eingerichtet ist um bei der Berechnung des zweiten Mittelwertes die originalen Signalproben (10a/10b) unabhängig von ihrem tatsächlichen Wert zu berücksichtigen.

5. Rauchsensor (2) nach Anspruch 5 **dadurch gekennzeichnet, dass** der Rauchsensor eingerichtet ist den ersten Mittelwert mit der Alarmschwelle zu vergleichen, wenn in der zweiten Vergleichseinrichtung festgestellt wird, dass der Zählerstand unter dem parametrierbaren Wert liegt und den zweiten Mittelwert mit der Alarmschwelle zu vergleichen, wenn in der zweiten Vergleichseinrichtung festgestellt wird, dass der Zählerstand über dem parametrierbaren Wert liegt.

6. Rauchsensor (2) nach einem oder mehreren der Ansprüche 3 bis 6, **dadurch gekennzeichnet, dass** der Rauchsensor ein Messvolumen (7) aufweist dessen Abmessungen mindestens gleich oder größer als der typische Abstand zwischen umgebenden Staubpartikeln sind.

## Claims

1. Method for detecting smoke, comprising the following method steps:
a) measuring electromagnetic beams which exit a measurement volume (7), wherein a directed flow is produced in the measurement volume,
b) forming first and second average values from a number of measurement values,
c) replacing measurement values (10b), which exceed or fall short of a threshold value (11), by an earlier average value (12) during formation of the first average value, wherein no replacements are effected in the second average value,
d) counting a number of measurement values replaced during formation of the first average value,
e) comparing the first or second average value with an alarm threshold, wherein when a specific number of replacements is exceeded, it is not the first average value but the second average value which is compared with the alarm threshold.

2. Smoke sensor (2) having means for carrying out the method as claimed in any one of claims 1 or 2, containing an average value calculation module for calculating a first and a second average value from n signal samples (10) of a receiver (6), a first comparator device for comparing the signal samples (10) with threshold values (11), a counter which counts a number of signal samples (10b) which were replaced during calculation of the first average value, a second comparator device which compares the counter status of the counter with a parameterizable value, and a third comparator device which compares the first or the second average value with an alarm threshold.

3. Smoke detector (2) as claimed in claim 3, **characterised in that** the average value calculation module is arranged to replace the signal samples (10b), which exceed or fall short of the threshold values (11), by an older average value (12) during calculation of the first average value.

4. Smoke detector (2) as claimed in claim 4, **characterised in that** the average value calculation module is arranged to take into consideration the original signal samples (10a/10b), independently of their actual value, during calculation of the second average value.

5. Smoke detector (2) as claimed in claim 5, **characterised in that** the smoke detector is arranged to compare the first average value with the alarm threshold when, in the second comparator device, it is ascertained that the counter status is below the parameterizable value, and to compare the second average value with the alarm threshold when, in the second comparator device, it is ascertained that the counter status is above the parameterizable value.

6. Smoke detector (2) as claimed in any one or several of claims 3 to 6, **characterised in that** the smoke detector has a measurement volume (7), the dimensions of which are at least equal to or greater than the typical distance between surrounding dust particles.

## Revendications

1. Procédé de détection de fumée comprenant les étapes suivantes :
a) mesure des rayons électromagnétiques qui sortent d'un volume de mesure (7), un courant dirigé étant produit dans le volume de mesure,
b) formation de premières et de deuxièmes valeurs moyennes à partir d'une pluralité de valeurs mesurées,
c) remplacement des valeurs mesurées (10b) qui sont supérieures ou inférieures à une valeur de seuil (11) par une valeur moyenne antérieure (12) lors de la formation de la première valeur moyenne, aucun remplacement n'étant effectué dans la deuxième valeur moyenne,
d) comptage d'une pluralité de valeurs mesurées remplacées lors de la formation de la première valeur moyenne,
e) comparaison de la première ou de la deuxième valeur moyenne avec un seuil d'alarme, un dépassement d'un nombre donné de remplacements entraînant une comparaison du seuil d'alarme non pas avec la première valeur moyenne, mais avec la deuxième valeur moyenne.

2. Détecteur de fumée (2) comprenant des moyens pour mettre en oeuvre le procédé selon la revendication 1, contenant un module de calcul de valeur moyenne destiné à calculer une première et une deuxième valeur moyenne à partir de n échantillons de signal (10) d'un récepteur (6), un premier dispositif de comparaison pour comparer les échantillons de signal (10) avec des valeurs de seuil (11), un compteur qui compte une pluralité d'échantillons de signal (10b) qui ont été remplacés lors du calcul de la première valeur moyenne, un deuxième dispositif de comparaison qui compare l'état de comptage du compteur avec une valeur paramétrable et un troisième dispositif de comparaison qui compare la première ou la deuxième valeur moyenne avec un seuil d'alarme.

3. Détecteur de fumée (2) selon la revendication 3, **caractérisé en ce que** le module de calcul de valeur moyenne est configuré pour, lors du calcul de la première valeur moyenne, remplacer les échantillons de signal (10b) qui sont supérieurs ou inférieurs aux valeurs de seuil (11) par une valeur moyenne plus ancienne (12).

4. Détecteur de fumée (2) selon la revendication 4, **caractérisé en ce que** le module de calcul de valeur moyenne est configuré pour, lors du calcul de la deuxième valeur, moyenne, tenir compte des échantillons de signal originaux (10a/10b) indépendamment de leur valeur affective.

5. Détecteur de fumée (2) selon la revendication 5, **caractérisé en ce que** le détecteur de fumée est configuré pour comparer la première valeur moyenne avec le seuil d'alarme lorsqu'il est constaté dans le deuxième dispositif de comparaison que l'état de comptage est inférieur à la valeur paramétrable et pour comparer la deuxième valeur moyenne avec le seuil d'alarme lorsqu'il est constaté dans le deuxième dispositif de comparaison que l'état de comptage est supérieur à la valeur paramétrable.

6. Détecteur de fumée (2) selon une ou plusieurs des revendications 3 à 6, **caractérisé en ce que** le détecteur de fumée présente un volume de mesure (7) dont les dimensions sont au minimum égales ou supérieures à l'écart type entre les particules de poussière environnantes.
